# EUROPÄISCHE PATENTANMELDUNG

(11) **EP 2 085 890 A1**
(43) Veröffentlichungstag der Anmeldung: **05.08.2009**
(21) Anmeldenummer: 09150626.1
(22) Anmeldetag: 15.01.2009
(51) Int. Cl.: G06F 13/40

(54) **Verfahren zur Übertragung von Daten zwischen wenigstens zwei Taktdomänen**

(30) Priorität: 17.01.2008 DE 102008004857
(71) Anmelder: Micronas GmbH, 79108 Freiburg (DE)
(72) Erfinder: Lutscher, Thorsten, 81547, München (DE)
(74) Vertreter: Patentanwälte Westphal, Mussgnug & Partner

(57) **Zusammenfassung**

Beschrieben wird ein Verfahren zur Übertragung von Daten zwischen einer ersten Taktdomäne mit einem ersten Takt (CLK1) und wenigstens einer weiteren Taktdomäne mit einem zweiten Takt (CLK2) das für die Übertragung von Daten von der ersten zu der zweiten Taktdomäne (CLK1, CLK2) aufweist:
Einlesen eines Datenwortes nach Maßgabe des ersten Taktes (CLK1) in einen ersten Speicher (11) und Sperren des ersten Speichers nach Speichern des Datenwortes,
Signalisieren eines Übertragungsstarts nach Speichern des Datenwortes in dem ersten Speicher (11) mittels eines Übertragungs-Startsignals (TS),
Auslesen des Datenwertes aus dem ersten Speicher und Einlesen des Datenwortes in einen zweiten Speicher, jeweils nach Maßgabe des zweiten Taktsignals (CLK2),
Verarbeiten des Übertragungs-Startsignals (TS) nach Maßgabe des zweiten Taktsignals (CLK2) zur Erzeugung eines Übertragungs-Endsignals (TD),
Verarbeiten des Übertragungs-Endsignals (TD) nach Maßgabe des ersten Taktsignals (CLK1) zur Erzeugung eines Freigabesignals (TD') und Freigeben des ersten Speichers abhängig von dem Freigabesignal (TD').

## Beschreibung

Die Erfindung betrifft ein Verfahren zur Übertragung von Daten zwischen wenigstens zwei Taktdomänen.

In elektronischen Systemen mit mehreren Prozessoren, sogenannten Multiprozessor-Systemen, kann das Problem auftreten, dass einzelne Prozessoren oder Gruppen einzelner Prozessoren unterschiedlichen Taktdomänen (engl.: clock domains) angehören, d.h. mit unterschiedlichen Takten arbeiten. Die einzelnen Takte können sich dabei hinsichtlich ihrer Frequenz und/oder hinsichtlich ihrer Phasenlage unterscheiden. Ein solches Multiprozessor-System ist beispielsweise ein sogenanntes System-On-Chip (SoC), das eine zentrale Verarbeitungseinheit (central processing unit, CPU) und wenigstens eine über ein Bussystem an die CPU angeschlossene Verarbeitungseinheit (processing units, PU) aufweist. Während des Betriebs kann die Verarbeitungseinheit Daten, beispielsweise Messdaten, erzeugen, die an die CPU geliefert werden sollen. Außerdem kann die Funktionsweise der wenigstens einen PU von einem oder mehreren veränderlichen Betriebsparametern abhängig sein, die von der CPU erzeugt werden und die an die PU geliefert werden müssen.

Zum Austausch von Daten zwischen Prozessoren verschiedener Taktdomänen ist in der DE 100 48 732 A1 vorgeschlagen, ein zentrales Register vorzusehen, auf das die einzelnen Prozessoren mit ihrer Taktfrequenz zugreifen können, und zwischen dem zentralen Register und den Prozessoren sogenannte Schattenregister vorzusehen, die zur Zwischenspeicherung der Daten dienen. Das Vorsehen dreier Register ist allerdings platzaufwändig und damit teuer.

In der US 6,948,017 B2 ist vorgeschlagen, zu zwei Prozessoren, die grundsätzlich mit unterschiedlichen Takten arbeiten, während einer Zeitdauer, während der die Prozessoren miteinander kommunizieren, einen gemeinsamen Takt zu erzeugen, nach dem die beiden Prozessoren während der Zeitdauer des Datenaustausches arbeiten.

Aufgabe der vorliegenden Erfindung ist, es ein einfaches und robustes Verfahren für eine Übertragung von Daten zwischen zwei Taktdomänen zur Verfügung zu stellen.

Diese Aufgabe wird durch ein Verfahren nach Anspruch 1 gelöst. Ausgestaltungen und Weiterbildungen sind Gegenstand von Unteransprüchen.

Bei einem Beispiel des erfindungsgemäßen Verfahrens zur Übertragung von Daten zwischen einer ersten Taktdomäne mit einem ersten Takt und wenigstens einer weiteren Taktdomäne mit einem zweiten Takt ist für die Übertragung von Daten von der ersten zu der zweiten Taktdomäne vorgesehen: Einlesen eines Datenwortes nach Maßgabe des ersten Taktes in einen ersten Speicher und Sperren des ersten Speichers nach Speichern des Datenwortes; Erzeugen eines Übertragungs-Startsignals nach Speichern des Datenwortes in dem ersten Speicher; Auslesen des Datenwortes aus dem ersten Speicher und Einlesen des Datenwortes in einen zweiten Speicher, jeweils nach Maßgabe des zweiten Taktsignals; Verarbeiten des Übertragungs-Startsignals nach Maßgabe des zweiten Taktsignals zur Erzeugung eines Übertragungs-Endsignals; Verarbeiten des Übertragungs-Endsignals nach Maßgabe des ersten Taktsignals zur Erzeugung eines Freigabesignals und Freigeben des ersten Speichers abhängig von dem Freigabesignal.

Beispiele der vorliegenden Erfindung werden nachfolgend anhand von Figuren näher erläutert. In diesem Zusammenhang sei angemerkt, dass die Figuren zur Veranschaulichung eines Grundprinzips der Erfindung dienen, so dass nur die zum Verständnis dieses Grundprinzips notwendigen Komponenten dargestellt sind. In den Figuren bezeichnen, sofern nicht anders angegeben, gleiche Bezugszeichen gleiche Teile und Signale mit gleicher Bedeutung.
- Figur 1: zeigt schematisch eine Datenverarbeitungsvorrichtung mit mehreren Taktdomänen und einer zwischen den Taktdomänen angeordneten Schnittstellenschaltung.
- Figur 2: zeigt schematisch ein Beispiel der Schnittstellenschaltung, die eine erste und eine zweite Verarbeitungs- und Speicherschaltung aufweist.
- Figur 3: zeigt ein Beispiel der ersten Verarbeitungs- und Speicherschaltung im Detail.
- Figur 4: zeigt ein Beispiel der zweiten Verarbeitungs- und Speicherschaltung im Detail.
- Figur 5: veranschaulicht zeitliche Verläufe in der Schnittstellenschaltung vorkommender Signale zur Veranschaulichung eines Verfahrens zur Übertragung von Daten von einer ersten Taktdomäne auf eine zweite Taktdomäne.
- Figur 6: zeigt ein Realisierungsbeispiel eines Teils einer in den Verarbeitungs- und Speicherschaltungen eingesetzten Signalverarbeitungsschaltung.
- Figur 7: zeigt ein Realisierungsbeispiel eines weiteren Teils der Signalverarbeitungsschaltung..
- Figur 8: zeigt zeitliche Verläufe in der Schnittstellenschaltung vorkommender Signale zur Veranschaulichung einer Übertragung von Daten von der zweiten Taktdomäne auf die erste Taktdomäne.
- Figur 9: zeigt schematisch eine Datenverarbeitungsvorrichtung mit mehr als zwei Taktdomänen und einer zwischen einer ersten Taktdomäne und den weiteren Taktdomänen angeordneten Schnittstellenschaltung.
- Figur 10: zeigt ein mögliches Realisierungsbeispiel eines Teils der in Figur 9 dargestellten Schnittstellenschaltung.

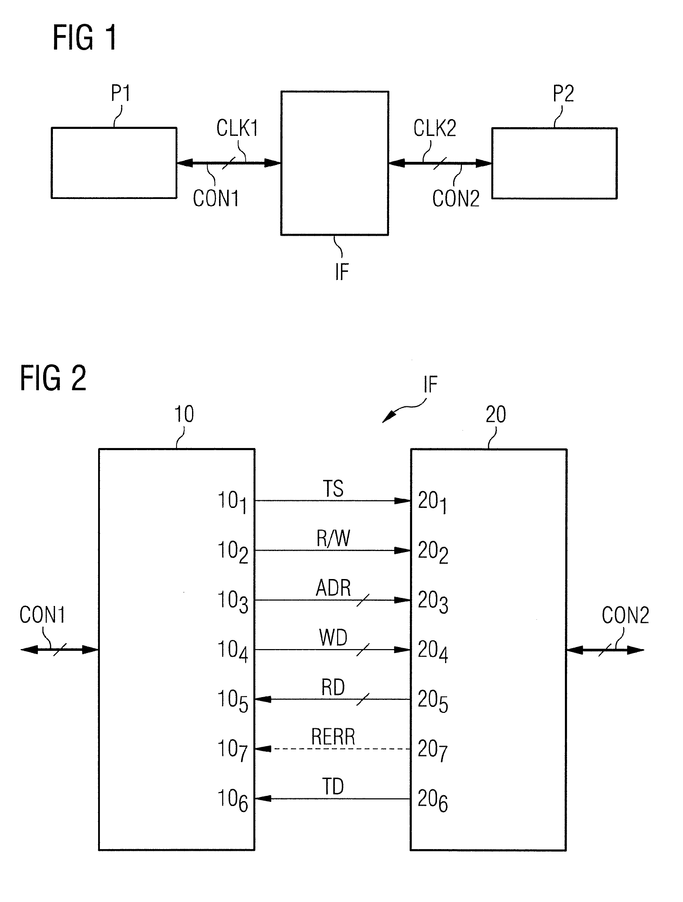

Figur 1 zeigt schematisch ein Beispiel einer Datenverarbeitungsvorrichtung, die mehrere - in dem dargestellten Beispiel zwei - Taktdomänen mit unterschiedlichen Takten CLK1, CLK2 aufweist. Jede der Taktdomänen weist einen Prozessor P1, P2 auf. Ein erster Prozessor P1 der Datenverarbeitungseinrichtung ist hierbei dazu ausgebildet, Daten im Takt des ersten Taktsignals CLK1 zu verarbeiten bzw. zur Verfügung zu stellen. Ein zweiter Prozessor P2 der zweiten Taktdomäne ist dazu ausgebildet, Daten im Takt des zweiten Taktsignals CLK2 zu verarbeiten bzw. zur Verfügung zu stellen. Die dargestellte Datenverarbeitungsvorrichtung ist beispielsweise ein sogenanntes Systeme-on-Chip (SoC). Der erste Prozessor P1 kann in diesem System eine zentrale Verarbeitungseinheit (Central Processing Unit, CPU) sein, der die dargestellte mehrere Taktdomänen aufweisende Datenverarbeitungsvorrichtung steuert.

Der zweite Prozessor P2 ist bei einem solchen SoC beispielsweise ein Mikrocontroller oder ein Signalverarbeitungsprozessor, kann jedoch ein rein hardwarebasierte Datenverarbeitungseinheit sein, die ohne Software auskommt, und damit nicht programmierbar ist. Unabhängig von der konkreten Realisierung wird für diese in der zweiten Taktdomäne angeordnete Datenverarbeitungseinheit nachfolgend die Bezeichnung "zweiter Prozessor" verwendet. Dieser zweite Prozessor P2 kann beispielsweise so realisiert sein, dass verschiedene Betriebsarten oder Funktionen über Konfigurationswerte bzw.

Konfigurationsparameter einstellbar sind. Diese Konfigurationswerte sind während des Betriebs des Mikrocontrollers beispielsweise in einem Register gespeichert, auf das der Mikrocontroller zur Einstellung der jeweiligen Betriebsart zugreift. Abhängig von der jeweiligen Anwendung kann es wünschenswert sein, diese Konfigurationsparameter durch den ersten Prozessor P1 einzustellen oder zu verändern. Hierfür ist eine Datenübertragung von dem ersten Prozessor P1 an den Mikrocontroller P2 über eine "Domänengrenze" zwischen den beiden Taktdomänen hinweg erforderlich. Für eine solche Datenübertragung zwischen den beiden Prozessoren P1, P2 der unterschiedlichen Taktdomänen ist bei der in Figur 1 dargestellten Datenverarbeitungsvorrichtung eine Schnittstellschaltung IF vorhanden, welche über eine erste Datenverbindung CON1 an den ersten Prozessor P1 und über eine zweite Datenverbindung CON2 an den zweiten Prozessor P2 angeschlossen ist. Die Datenverbindungen CON1, CON2 können insbesondere als Datenbusse realisiert sein, über welche Daten im Takt der jeweiligen Taktdomäne übertragen werden, das heißt im ersten Takt CLK1 über die erste Datenverbindung CON1 und im zweiten Takt CLK2 über die zweite Datenverbindung CON2. Aufgabe der Schnittstellenschaltung ist es dabei, eine Datenkommunikation der beiden Prozessoren P1, P2 über die Taktdomänengrenze hinweg zu ermöglichen, wobei der erste und der zweite Takt in einem beliebigen Taktverhältnis zueinander stehen können.

Aus Gründen einer vereinfachten Darstellung weist die Vorrichtung gemäß Figur 1 lediglich einen Prozessor P1 der ersten Taktdomäne und einen Prozessor P2 der zweiten Taktdomäne dargestellt. Die Erfindung ist selbstverständlich nicht auf die Verwendung nur eines Prozessors in einer Taktdomäne beschränkt, sondern ist auch auf Datenverarbeitungsvorrichtungen anwendbar, die in der zweiten Taktdomäne mehr als einen Prozessor aufweist und die auch mehr als zwei Taktdomänen aufweisen kann. Darüber hinaus können sich die beiden Prozessoren auch in derselben Taktdomäne befinden.

Ein Beispiel einer Schnittstellenschaltung IF, die eine Datenkommunikation über die Domänengrenze hinweg ermöglicht, ist in Figur 2 schematisch dargestellt. Die dargestellte Schnittstellenschaltung IF weist eine erste Verarbeitungs- und Speicherschaltung 10, die an die erste Datenverbindung CON1 angeschlossen ist, und eine zweite Verarbeitungs- und Speicherschaltung 20, die an die zweite Datenverbindung CON2 angeschlossen ist, auf. Als Beispiel sei für die nachfolgende Erläuterung angenommen, dass die zwischen der ersten und zweiten Taktdomäne auszutauschenden Daten Registerdaten sind, die entweder von dem ersten Prozessor P1 erzeugt und in einem Register in der zweiten Taktdomäne abgespeichert werden sollen oder die aus einem Register in der zweiten Taktdomäne ausgelesen und an den ersten Prozessor P1 übertragen werden sollen. Dieses Register ist beispielsweise in der zweiten Verarbeitungs- und Speichereinheit 20 angeordnet. Die von dem ersten Prozessor P1 gelieferten und in das Register einzuschreibenden Daten sind beispielsweise Konfigurationsdaten für in der zweiten Taktdomäne vorhandene Prozessoren oder Mikrocontroller (wie beispielsweise der in Figur 1 dargestellte Prozessor P2), oder sind Ergebniswerte, die durch die in der zweiten Taktdomäne angeordneten Prozessoren in das Register geschrieben und zur weiteren Verarbeitung an den Prozessor P1 in der ersten Taktdomäne übertragen werden sollen. Die von dem zweiten Prozessor P2 an den ersten Prozessor gelieferten Informationen sind beispielsweise Statusinformationen über Rechenoperationen, die durch den zweiten Prozessor P2 durchgeführt werden.

Die dargestellte Datenverarbeitungsvorrichtung ist beispielsweise eine Videosignalverarbeitungsvorrichtung, bei der der zweite Prozessor P2, gegebenenfalls zusammen mit weiteren Prozessoren (nicht dargestellt), ein ihm zugeführtes Videosignal (nicht dargestellt) verarbeitet. Eine solche Verarbeitung umfasst beispielsweise eine Zwischenzeileninterpolation bei einem Deinterlacing-Verfahren oder eine bewegungsrichtige Interpolation von Zwischenbildern bei einer 50Hz-100Hz-Wandlung. Die von dem ersten Prozessor gelieferten Konfigurationsdaten bilden hierbei Parameter für diese Videosignalverarbeitung.

Für die weitere Erläuterung sei außerdem angenommen, dass Schreib- und Lesezugriffe auf das Register der zweiten Taktdomäne durch den ersten Prozessor P1 gesteuert werden. Für einen Schreibzugriff auf dieses Register gibt der erste Prozessor P1 über die erste Datenverbindung CON1 eine Datenfolge aus, die wenigstens folgende Daten/Informationen enthält: einen Schreibbefehl, eine Registeradresse und ein Nutzdatenwort. Die Registeradresse gibt dabei an, an welchem Speicherplatz des in der zweiten Taktdomäne angeordneten Registers das Nutzdatenwort geschrieben werden soll. Die durch den ersten Prozessor bereitgestellte Datenfolge kann seriell übertragen werden; zugunsten einer höheren Übertragungsgeschwindigkeit erfolgt diese Datenkommunikation jedoch insbesondere parallel, d.h. über mehrere parallele Leitungen, die gemeinsam die erste Datenverbindung CON1 bilden, gleichzeitig. In entsprechender Weise kann die zweite Datenverbindung eine serielle oder parallele Datenverbindung sein. Für einen Lesezugriff auf das in der zweiten Taktdomäne angeordnete Register umfasst die von dem ersten Prozessor P1 an die erste Verarbeitungs- und Speicherschaltung 10 übersandte Datenfolge wenigstens folgende Daten/Informationen: einen Lesebefehl, eine Registeradresse, die die Adresse angibt, an der das Register ausgelesen werden soll.

Für die zuvor erläuterten Registeroperationen, d.h. einen Schreibzugriff und einen Lesezugriff auf das in der zweiten Taktdomäne angeordnete Register, sind zwischen der ersten Verarbeitungs- und Speichereinheit 10 und der zweiten Verarbeitungs- und Speichereinheit 20 in dem dargestellten Beispiel folgende Signalverbindungen vorhanden:
- eine Befehlsverbindung zwischen einem Befehlsausgang 10₂ der ersten Einheit 10 und einem Befehlseingang 20₂ der zweiten Einheit 20;
- eine Adressverbindung zwischen einem Adressausgang 10₃ der ersten Einheit 10 und einem Adresseingang 20₃ der zweiten Einheit 20;
- eine erste Datenverbindung zwischen einem Datenausgang 10₄ der ersten Einheit 10 und einem Dateneingang 20₄ der zweiten Einheit 20; und
- eine zweite Datenverbindung zwischen einem Datenausgang 20₅ der zweiten Einheit 20 und einem Dateneingang 10₅ der ersten Einheit 10.

Über die Befehlsverbindung wird ein Lese- oder Schreibbefehl R/W von der ersten Einheit 10 an die zweite Einheit 20 übertragen, der angibt, ob ein Wert in das in der zweiten Taktdomäne vorhandene Register geschrieben werden soll, oder ob ein Wert aus diesem Register ausgelesen werden soll. Über die Adressverbindung wird die Adresse der Registerposition übertragen, in die das Nutzdatenwort eingelesen werden soll, oder aus der ein Datenwort ausgelesen werden soll. Über die erste Datenverbindung werden von der ersten Einheit 10 an die zweite Einheit 20 übertragene, in das Register einzulesende Datenworte übertragen, während über die zweite Datenverbindung aus dem Register ausgelesene Werte von der zweiten Einheit 20 an die erste Einheit 10 übertragen werden. In diesem Zusammenhang sei angemerkt, dass anstelle zweier Datenverbindungen, die jeweils nur in eine Richtung - also unidirektional - genutzt werden, auch eine Datenverbindung vorgesehen werden könnte, die in beide Richtungen - also bidirektional - genutzt wird, wobei der Wert des Schreib- oder Lesebefehls R/W die Übertragungsrichtung vorgibt.

Die erste Verarbeitungs- und Speichereinheit 10 ist dazu ausgebildet, Daten von dem ersten Prozessor P1, die in dem Register der zweiten Taktdomäne gespeichert werden sollen, zwischenzuspeichern und auch Daten, die von dem in der zweiten Taktdomäne angeordneten Register an den ersten Prozessor P1 übertragen werden sollen, zwischenzuspeichern. Um eine fehlerfreie Datenkommunikation über die zwischen der ersten Verarbeitungs- und Speichereinheit 10 und der zweiten Verarbeitungs- und Speichereinheit 20 verlaufende Domänengrenze hinweg zu ermöglichen, sind erste und zweite Signalisierungsverbindungen zwischen der ersten Einheit 10 und der zweiten Einheit 20 vorhanden. Eine erste Signalisierungsverbindung zwischen einem Signalisierungsausgang 10₁ der ersten Einheit 10 und einem Signalisierungseingang 20₁ der zweiten Einheit 20 dient zur Übertragung eines Übertragungs-Startsignals TS, das der zweiten Einheit 20 anzeigt, wenn in der ersten Einheit 10 zwischengespeicherte Daten zur Verfügung stehen, um in das in der zweiten Taktdomäne angeordnete Register eingelesen zu werden. Über die zweite Signalisierungsverbindung wird von der zweiten Einheit 20 ein Übertragungs-Endsignal TD an die erste Einheit 10 übertragen, wenn der Vorgang abgeschlossen ist, durch den die in der ersten Einheit 10 zwischengespeicherten Daten in das Register geschrieben werden. Bei einem Schreibvorgang signalisiert das Startsignal TS, dass das in das Register zu schreibende Datenwort und die Registeradresse, an welche das Datenwort zu schreiben ist, in der ersten Einheit zwischengespeichert sind. Bei einem Lesezugriff, bei dem Daten aus dem Register ausgelesen werden sollen, signalisiert das Startsignal TS, dass die Registeradresse, an der das Register ausgelesen werden soll, in der ersten Einheit 10 zwischengespeichert ist.

Optional können weitere Signalisierungsverbindungen zwischen der ersten und zweiten Einheit 10, 20 vorhanden sein, beispielsweise eine dritte Signalisierungsverbindung zwischen einem zweiten Signalisierungsausgang 20₇ der zweiten Einheit 20 und einem zweiten Signalisierungseingang 10₇ der ersten Einheit 10. Über diese dritte Signalisierungsverbindung wird beispielsweise ein Lesefehler-Signal RERR übertragen, welches signalisiert, ob ein Lesevorgang fehlerfrei oder fehlerbehaftet erfolgt ist. Ein einen Lesefehler repräsentierender Signalpegel dieses Signals RERR wird in nicht näher erläuterter Weise beispielsweise dann erzeugt, wenn eine Registeradresse, an der ein Wert abgespeichert werden soll, nicht existiert.

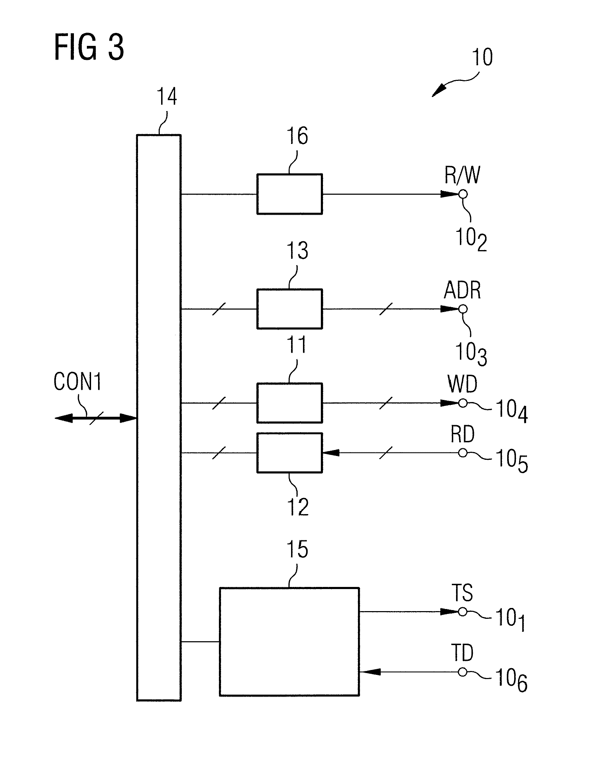

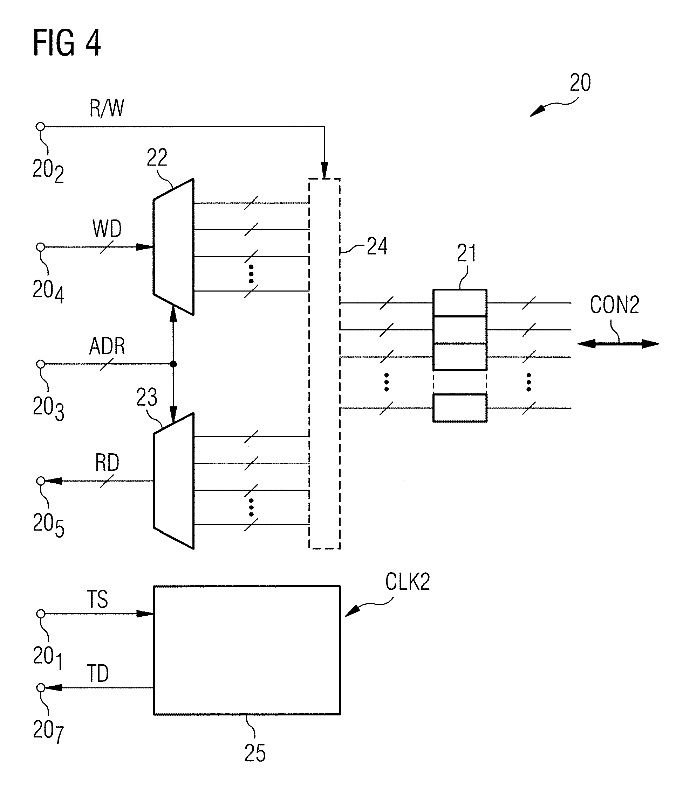

Mögliche Realisierungsbeispiele der zuvor erläuterten ersten und zweiten Verarbeitungs- und Speichereinheit 10, 20 werden nachfolgend anhand der Figuren 3 und 4 erläutert, in denen diese Einheiten 10 (in Figur 3) und 20 (in Figur 4) schematisch als Blockschaltbilder dargestellt sind. Die in Figur 3 dargestellte erste Verarbeitungs- und Speichereinheit 10 weist einen ersten Datenspeicher 11 und einen zweiten Datenspeicher 12 jeweils zur Zwischenspeicherung eines Datenwortes, beispielsweise eines Datenwortes der Länge n Bit, und einen Adressspeicher 13 zur Zwischenspeicherung einer Registeradresse, beispielsweise einer Registeradresse der Länge m Bit, auf. Der erste Datenspeicher 11 dient zur Zwischenspeicherung eines von dem ersten Prozessor P1 über die erste Datenverbindung CON1 bereitgestellten Datenwortes, das in dem in der zweiten Taktdomäne angeordneten Register gespeichert werden soll. Zwischen der Datenverbindung CON1 und dem ersten Datenspeicher 11 ist eine Steuerschaltung 14 angeordnet, die die Funktion der ersten Verarbeitungs- und Speichereinheit 10 steuert und die dazu ausgebildet ist, bei einem Lesezugriff das in das Register einzulesende Datenwort aus der von dem ersten Prozessor P1 über die erste Datenverbindung CON1 bereitgestellten Datenfolge zu extrahieren und in dem ersten Datenspeicher 11 zwischenzuspeichern. WD bezeichnet dabei eine in dem ersten Datenspeicher 11 gespeicherte und an dem Datenausgang 10₄ anliegendes Datenwort. Die Steuerschaltung 14 ist außerdem dazu ausgebildet, aus dieser Datenfolge die Adressdaten zu extrahieren und in dem Adressspeicher 13 zwischenzuspeichern. ADR bezeichnet dabei eine in dem Adressspeicher gespeicherte und an dem Adressausgang 10₃ anliegende Registeradresse.

Außerdem extrahiert die Steuerschaltung 14 aus der von dem ersten Prozessor P1 bereitgestellten Datenfolge das Schreib-/Lesesignal und stellt dies am Befehlsausgang 10₂ der ersten Einheit 10 zur Verfügung. Hierzu ist ein weiterer Speicher 16 vorhanden, der zwischen die Steuerschaltung 14 und den Befehlsausgang geschaltet ist und in dem das Schreib-/Lesesignal während eines Schreib- oder Lesevorgangs abgespeichert wird. Der zweite Datenspeicher 12 dient zur Zwischenspeicherung eines aus dem Register ausgelesenen, an dem Dateneingang 10₅ bei einem Lesevorgang zur Verfügung stehenden Datenwortes. Die Steuerschaltung 15 ist dazu ausgebildet, bei einem solchen Lesevorgang das in dem zweiten Datenspeicher 12 gespeicherte Datenwort an die erste Datenverbindung CON1 für den ersten Prozessor P1 auszugeben.

Die erste Verarbeitungs- und Speichereinheit 10 weist außerdem eine erste Signalisierungsschaltung 15 auf, die gesteuert durch die Steuerschaltung 14 das Übertragungs-Startsignal TS an dem Signalisierungsausgang 10₁ erzeugt und die dazu ausgebildet ist, das an dem Signalisierungseingang 10₆ zur Verfügung stehende Übertragungs-Endsignal zu verarbeiten. Der Aufbau und die Funktionsweise dieser ersten Signalisierungsschaltung 15 wird nachfolgend noch erläutert werden.

Die zweite Verarbeitungs- und Speicherschaltung 20 weist bezugnehmend auf Figur 4 das bereits zuvor erläuterte Register 21 auf, auf welches der in der zweiten Taktdomäne angeordnete wenigstens eine Prozessor P2 über die zweite Datenverbindung CON2 zugreifen kann. Das Register 21 weist eine Anzahl von Speicherplätzen auf, die jeweils zur Speicherung eines Datenwortes dienen und die jeweils separat über die Registeradresse ADR adressierbar sind. Die zweite Verarbeitungs- und Speichereinheit 20 weist außerdem einen ersten Multiplexer 22 mit einem Eingang und mit mehreren Ausgängen, sowie einen zweiten Multiplexer 23 mit mehreren Eingängen und einem Ausgang auf. Der Eingang des ersten Multiplexers 22 ist in dem dargestellten Beispiel an den Dateneingang 20₄ der zweiten Einheit 20 angeschlossen. Der erste Multiplexer 22 ist dazu ausgebildet, abhängig von dem am Adresseingang 20₃ anliegenden Adresssignal ADR ein am Eingang des Multiplexers 22 anliegendes Schreib-Datenwort WD an einem seiner Ausgänge zur Verfügung zu stellen. Jeder der Ausgänge des ersten Multiplexers 22 ist dabei entweder fest an einen der Speicherplätze des Registers 21 angeschlossen oder sind über einen optional vorhandenen, und noch zu erläuternden weiteren Multiplexer 24 an jeweils einen dieser Speicherplätze des Registers 24 anschließbar. Die Eingänge des zweiten Multiplexers 23 sind jeweils entweder fest an einen der Speicherplätze des Registers 21 angeschlossen oder sind über den optional vorhandenen weiteren Multiplexer 24 an jeweils einen dieser Speicherplätze anschließbar. Der zweite Multiplexer 23 ist dazu ausgebildet, abhängig von dem Adresssignal ADR jeweils einen seiner Eingänge mit seinem Ausgang zu verbinden, um das an diesem Eingang anliegende, aus dem Register 21 ausgelesene Datenwort RD an dem Datenausgang 20₅ der zweiten Einheit 20 zur Verfügung zu stellen.

Für die Zuordnung der Registerspeicherplätze zu den Ausgängen des ersten Multiplexers 22 bzw. den Eingängen des zweiten Multiplexers 23 gibt es verschiedene Varianten:

Bei einer ersten Variante sind Speicherplätze einer ersten Gruppe von Speicherplätzen fest mit Ausgängen des ersten Multiplexers 22 verbunden, und sind dadurch ausschließlich über diesen Multiplexer 22 beschreibbar; und Speicherplätze einer zweiten Gruppe von Speicherplätzen sind fest mit Eingängen des Multiplexers 23 verbunden und sind dadurch ausschließlich über diesen Multiplexer 23 auslesbar. Die zweite Gruppe von Speicherplätzen, die nur über den Multiplexer ausgelesen werden, und die von dem zweiten Prozessor P2 zuvor bereitgestellte Daten enthalten, ist optional vorhanden. Auf diese Speicherplätze kann verzichtet werden, wenn die an den ersten Prozessor zu übertragenden Daten bei einem Lesevorgang unmittelbar durch den zweiten Prozessor P2 bereitgestellt werden.

Die erste Gruppe von Speicherplätzen sind beispielsweise Speicherplätze zur Speicherung von Konfigurationsparametern des wenigstens einen in der zweiten Taktdomäne vorhandenen Prozessors P2. Die zweite Gruppe von Speicherplätzen dient beispielsweise zur Speicherung von Ergebniswerten, die durch den wenigstens einen in der zweiten Taktdomäne vorhandenen Prozessor bereitgestellt werden. Das Auslesen von in der ersten Gruppe von Speicherplätzen gespeicherten Datenworten durch den wenigstens einen zweiten Prozessor P2 und das Einlesen von Datenworten durch den wenigstens einen zweiten Prozessor P2 in die zweite Gruppe von Speicherplätzen erfolgt durch eine nicht näher dargestellte Logikschaltung. Funktionsweise und Aufbaue einer solchen Logikschaltung sind grundsätzlich bekannt, so dass auf weitere Ausführungen hierzu verzichtet werden kann.

Bei einer zweiten Variante ist vorgesehen, dass Speicherplätze wahlweise über den ersten Multiplexer 22 mit Daten des ersten Prozessors beschreibbar sind und durch den wenigstens einen zweiten Prozessor P2 auslesbar, oder dass der erste Prozessor P1 die zuvor in diese Speicherplätze geschriebenen Daten über den zweiten Multiplexer wieder auslesen kann.. Der optional vorhandene weitere Multiplexer 24, der durch das Schreib-/Lesesignal R/W gesteuert ist, schließt hierbei entweder die Ausgänge des ersten Multiplexers 22 zum Schreiben von Daten an die Register-Speicherplätze oder die Eingänge des zweiten Multiplexers 23 zum Auslesen von Daten aus den Register-Speicherplätzen an diese Register-Speicherplätze an.

Eine dritte Variante ist eine Kombination der ersten und zweiten Variante, d.h. es gibt Speicherzellen, die nur über den ersten Multiplexer 22 beschrieben und durch den wenigstens einen zweiten Prozessor P2 ausgelesen werden; Speicherzellen, die nur durch den wenigstens einen zweiten Prozessor P2 beschrieben und über den zweiten Multiplexer 23 ausgelesen werden; und Speicherzellen, die sowohl über den ersten Prozessor P1 beschreibbar und auslesbar und durch den zweiten Prozessor P2 nur auslesbar sind.

Die zweite Verarbeitungs- und Speichereinheit 20 weist außerdem eine zweite Signalisierungsschaltung 25 auf, die dazu ausgebildet ist, das am Signalisierungseingang 20₁ zur Verfügung stehende Übertragungs-Startsignal TS zu verarbeiten und das am Signalisierungsausgang 20₇ bereitgestellte Übertragungs-Endsignal TD zu erzeugen.

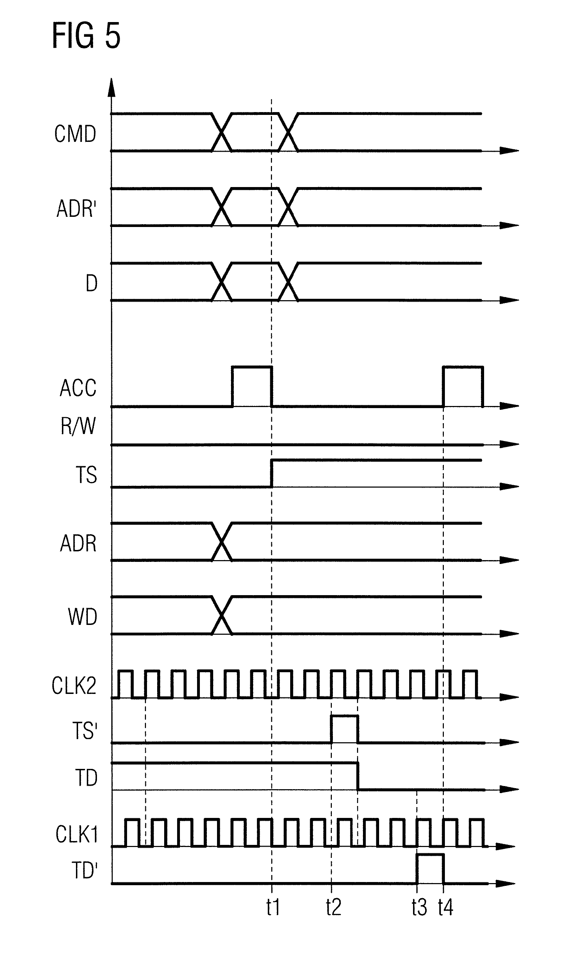

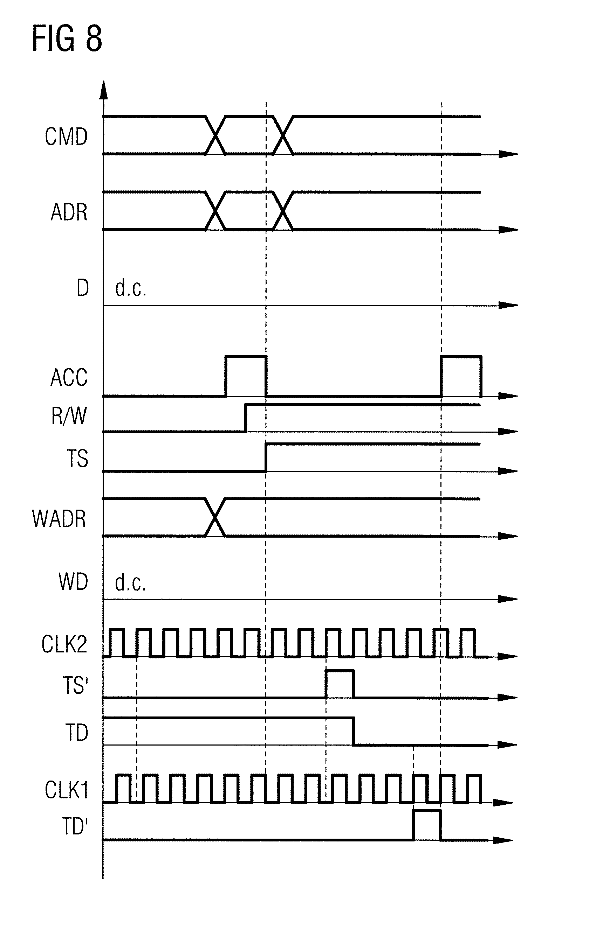

Die Funktionsweise der zuvor anhand der Figuren 2 bis 4 erläuterten Schnittstellenschaltung IF wird nachfolgend anhand zeitlicher Signalverläufe, die in Figur 5 dargestellt sind, erläutert. Die in Figur 5 dargestellten zeitlichen Signalverläufe betreffen einen Schreibvorgang, bei dem durch den ersten Prozessor P1 gelieferte Daten in das in der zweiten Taktdomäne angeordnete Register (21 in Figur 4) geschrieben werden. Zeitliche Signalverläufe für einen Lesevorgang, bei dem Daten aus dem Register ausgelesen werden, sind in der noch zu erläuternden Figur 8 dargestellt.

Für die weitere Erläuterung sei angenommen, dass bei einem Schreibvorgang ein Schreibbefehl, Adressdaten und in das Register zu schreibende Nutzdaten über die erste Datenverbindung CON1 von dem ersten Prozessor P1 an die Schnittstellenschaltung IF übertragen werden. Diese von dem Prozessor P1 übertragenen Daten sind in Figur 5 in den oberen drei Zeitdiagrammen dargestellt. CMD beschreibt hierbei ein Befehlssignal, das den Schreib- oder Lesebefehl enthält, ADR' bezeichnet Adressdaten, die die Adresse des Registerspeicherplatzes angeben, an dem die Nutzdaten abgespeichert werden sollen. D bezeichnet die im Register abzuspeichernden Nutzdaten. In bereits erläuterter Weise ist die Steuerschaltung 14 dazu ausgebildet, die Nutzdaten in dem ersten Datenspeicher (11 in Figur 3), die Adressdaten im zweiten Datenspeicher (13 in Figur 3) abzuspeichern und den in dem Befehlssignal CMD enthaltenden Befehl an den Befehlsausgang 10₂ zur Verfügung zu stellen. t1 bezeichnet in Figur 5 einen Zeitpunkt, zu dem die Nutzdaten in dem ersten Speicher 11 und die Adressdaten in dem zweiten Speicher 13 abgespeichert sind und ab dem spätestens der Schreibbefehl an dem Befehlsausgang 10₂ zur Verfügung steht. Zu diesem Zeitpunkt sendet die Steuerschaltung 14 über die erste Datenverbindung CON1 eine Bestätigung an den ersten Prozessor P1, das die Übernahme der Daten bestätigt. Diese Bestätigung ist in dem dargestellten Beispiel eine fallende Flanke eines Bestätigungssignals ACC. Gleichzeitig werden zu diesem Zeitpunkt t1 der erste und zweite Datenspeicher gegen ein weiteres Beschreiben mit Daten bzw. gegen ein Verändern der gespeicherten Daten gesperrt. Zu Zwecken der Erläuterung sei angenommen, dass das Bestätigungssignal ACC jeweils einen Low-Pegel annimmt, wenn die Speicher 11, 13 für ein Beschreiben mit Daten gesperrt sind und dass das Bestätigungssignal ACC einen High-Pegel annimmt, wenn die Speicher 11, 13 für das Beschreiben der Daten freigegeben sind.

Spätestens ab dem Zeitpunkt t1 steht am Ausgang des ersten Speichers 11 dauerhaft das zuvor in diesem Speicher 11 geschriebene Datenwort WD zur Verfügung, und am Ausgang des zweiten Speichers 13 stehen dauerhaft die zuvor in diesem Adressspeicher gespeicherten Adressdaten ADR zur Verfügung. Das Schreib-/Lesesignal R/W ist in dem dargestellten Beispiel so gewählt, dass es für einen Schreibvorgang einen Low-Pegel und für einen Lesevorgang (vgl. Figur 8) einen High-Pegel annimmt.

Wenn die Nutzdaten in dem ersten Speicher 11 und die Adressdaten in dem Adressspeicher 13 gespeichert sind, signalisiert die erste Signalisierungsschaltung 15 gesteuert durch die Steuerschaltung 14 der zweiten Verarbeitungs- und Speichereinheit 20, dass in dem ersten Datenspeicher 11 sowie dem Adressspeicher 13 Daten zur Verfügung stehen, die ausgelesen und verarbeitet werden können. Diese Signalisierung erfolgt in dem dargestellten Beispiel durch einen Pegelwechsel des Übertragungs-Startsignals TS. Dieser Pegelwechsel erfolgt beispielsweise zum selben Zeitpunkt, zu dem der erste Speicher 11 und der Adressspeicher 13 gesperrt werden, in dem Beispiel also bei einer fallenden Flanke des Bestätigungssignals ACC. Diese Signalisierung könnte jedoch auch später erfolgen.

Das Übertragungs-Startsignal TS wechselt seinen Pegel nur einmal pro Schreib- oder Leseoperation. Bei den in Figur 5 dargestellten Signalverläufen ist der Pegelwechsel des Übertragungs-Startsignals TS zum Zeitpunkt t1 ein Wechsel von einem Low-Pegel auf einen High-Pegel, zu Beginn einer nächsten Schreib- oder Leseoperation (nicht dargestellt) ist dieser Pegelwechsel dann ein Wechsel von einem High-Pegel auf einen Low-Pegel.

CLK1 und CLK2 bezeichnen in Figur 5 das erste Taktsignal der ersten Taktdomäne und das zweite Taktsignal der zweiten Taktdomäne. In dem dargestellten Beispiel besitzen diese Taktsignale CLK1, CLK2 die gleiche Taktfrequenz, sind jedoch gegeneinander phaseverschoben. Die Erfindung funktioniert in gleicher Weise jedoch auch für erste und zweite Taktsignale mit unterschiedlichen Taktfrequenzen, die dann im beliebigen Frequenz- und Phasenverhältnis zueinander stehen können (nicht dargestellt).

Das Übertragungs-Startsignal TS wird in der zweiten Verarbeitungs- und Speichereinheit 20 nach Maßgabe des zweiten Taktsignals CLK2 durch die zweite Signalisierungsschaltung (25 in Figur 4) verarbeitet. Diese Verarbeitung erfolgt in dem dargestellten Beispiel derart, dass nach Ablauf einer vorgegebenen Anzahl von Taktperioden des zweiten Taktsignals CLK2 nach einem Pegelwechsel des Übertragungs-Startsignals TS das Ende der Leseoperation an die erste Verarbeitungs- und Speichereinheit 10 signalisiert wird. Diese Signalisierung erfolgt durch das von der zweiten Signalisierungsschaltung 25 an die erste Signalisierungsschaltung 15 übertragene Übertragungs-Endsignal TD, speziell durch einen Pegelwechsel dieses Übertragungs-Endsignal TD. Entsprechend des Übertragungs-Startsignals TS ändert das Übertragungs-Endsignal TD seinen Pegel nur einmal während eines Lesevorgangs oder eines Schreibvorgangs. Information wird durch diese beiden Signale TS, TD also nur durch Pegelwechsel, nicht durch deren momentanen Pegel übertragen.

Bei dem in Figur 5 dargestellten Beispiel werden eine erste vorgegebene Anzahl Taktperioden des zweiten Taktsignals CLK2 nach dem Pegelwechsel des Übertragungs-Startsignals TS abgewartet, bis durch einen Pegelwechsel des Übertragungs-Endsignals TD ein Ende der Übertragung an die erste Verarbeitungs- und Speichereinheit 10 signalisiert wird. Ein Pegelwechsel des Übertragungs-Endsignals TD wird in dem Beispiel mit dem Beginn einer vierten Taktperiode des zweiten Taktsignals CLK2 nach dem Pegelwechsel des Übertragungs-Startsignals erzeugt.

Das Übertragungs-Endsignal TD wird in der ersten Verarbeitungs- und Speichereinheit 10 nach Maßgabe des ersten Taktsignals CLK1 verarbeitet. In dem dargestellten Beispiel wird nach dem Pegelwechsel des Übertragungs-Endsignals TD eine vorgegebene Anzahl von Taktperioden des ersten Taktsignals CLK1 abgewartet, bis der erste Speicher 11 und der Adressspeicher 13 für ein erneutes Beschreiben freigegeben werden. Dies ist in Figur 5 zum Zeitpunkt t4 durch eine steigende Flanke des Bestätigungssignals ACC repräsentiert.

Die Erzeugung eines Pegelwechsels des Übertragungs-Endsignals TD abhängig von dem Übertragungs-Startsignal TS und dem zweiten Taktsignal CLK2 erfolgt in dem dargestellten Beispiel unter Verwendung eines ersten Hilfssignals TS'. Dieses erste Hilfssignal TS' ist ein Signalimpuls dessen Dauer dem einer Taktperiode des zweiten Taktsignals CLK2 entspricht. In dem dargestellten Beispiel wird der Signalimpuls des ersten Hilfssignals TS' zu Beginn der dritten Taktperiode des zweiten Taktsignals CLK2 nach dem Pegelwechsel des Übertragungs-Startsignals TS erzeugt.

Der Pegelwechsel des Übertragungs-Endsignals TD ist gegenüber dem Beginn eines Signalimpulses des Hilfssignals TS' in dem dargestellten Beispiel derart verzögert, dass ein Pegelwechsel des Übertragungs-Endsignals TD nach Beginn einer zweiten Taktperiode des Taktsignals CLK2 nach dem Beginn des Signalsimpulses des Hilfssignals TS' vorliegt. Hieraus resultiert für das vorliegende Beispiel die zuvor erläuterte Gesamtverzögerung von vier Taktperioden zwischen dem Pegelwechsel des Übertragungs-Startsignals TS und dem Pegelwechsel des Übertragungs-Endsignals. Es sei darauf hingewiesen, dass die genannte Verzögerung von vier Taktperioden zwischen einem Pegelwechsel des Übertragungs-Startsignals TS und einem Pegelwechsel des Übertragungs-Endsignals lediglich als Beispiel zu verstehen ist, und dass die Verzögerung von der Frequenz- und Phasendifferenz von CLK1 und CLK2 abhängt.

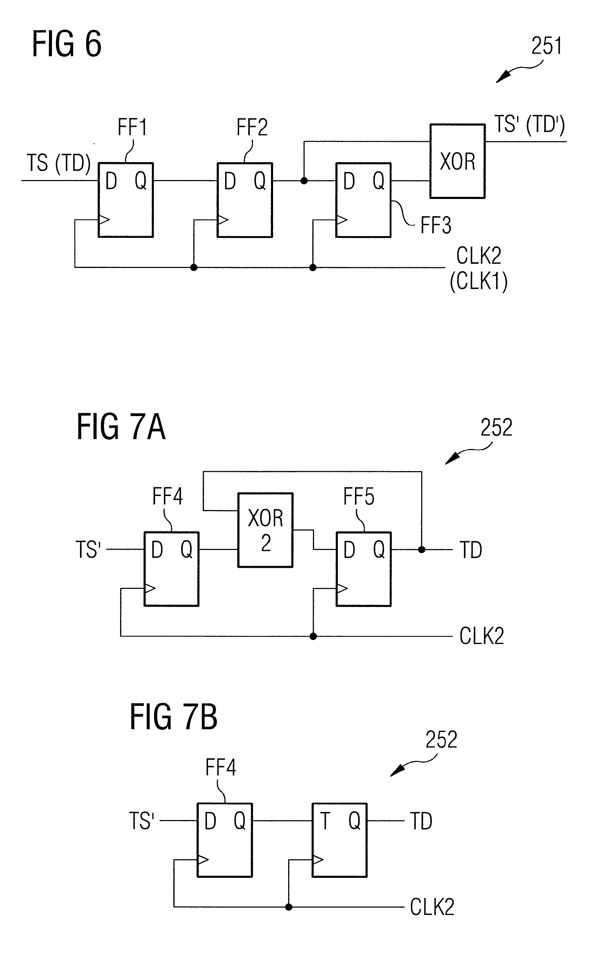

Figur 6 zeigt ein Realisierungsbeispiel einer Schaltung 251 zur Erzeugung des ersten Hilfssignals TS' aus dem Übertragungs-Startsignal TS. Diese Schaltung 251 ist Teil der zweiten Signalisierungsschaltung 25, der das Übertragungs-Startsignal TS zugeführt ist, und die das Übertragungs-Endsignal TD erzeugt. Die Schaltung 251 umfasst mehrere - in dem Beispiel drei - kaskadierte D-Flip-Flops mit jeweils einem Takteingang, dem das zweite Taktsignal CLK2 zugeführt ist. Dem Dateneingang D eines ersten FF1 der kaskadierten Flip-Flops ist das Übertragungs-Startsignal TS zugeführt, den Dateneingängen D der beiden anderen Flip-Flops FF2, FF3 ist das Ausgangssignal des in der Kaskade jeweils vorangeschalteten Flip-Flops zugeführt. Die kaskadierten Flip-Flops sind beispielsweise jeweils positivflankengetriggerte Flip-Flops, die mit jeder steigenden Flanke des Taktsignals CLK2 den Pegel des an ihrem Dateneingang D anliegenden Signals speichern. Liegt ein Pegelwechsel des am Eingang des ersten Flip-Flops FF1 anliegenden Übertragungs-Startsignals TS vor, so ändert sich der Pegel des Eingangssignals des dritten Flip-Flops FF3 zu Beginn der zweiten Taktperiode des zweiten Taktsignals CLK2 nach diesem Pegelwechsel. Während dieser zweiten Taktperiode unterscheiden sich das Eingangssignal des dritten Flip-Flops FF3 und dessen Ausgangssignal. Das erste Hilfssignal TS' steht bei der in Figur 6 dargestellten Signalisierungsschaltung 25 am Ausgang eines Logikgatters, in dem Beispiel eines XOR-Gatters zur Verfügung, dessen Eingängen das Eingangssignal und das Ausgangssignal des Flip-Flops FF3 zugeführt sind. Das erste Hilfssignal TS' nimmt bei dieser Anordnung nach Beginn einer zweiten Taktperiode nach einem Pegelwechsel des Übertragungs-Startsignals TS einen High-Pegel an, und zwar während der Zeitdauer, während der sich das Eingangssignal und das Ausgangssignal des dritten Flip-Flops FF3 in ihren Pegeln unterscheiden. Eine größere Verzögerungsdauer zwischen dem Zeitpunkt eines Pegelwechsels des Übertragungs-Startsignals TS und dem Signalimpuls des Hilfssignals TS' als die erläuterte Verzögerung von zwei Taktperioden kann aufgrund der Frequenz- und Phasendifferenz von CLK1 und CLK2 auftreten.

Zur Erzeugung des Übertragungs-Endsignals TD aus dem ersten Hilfssignal TS' weist die erste Signalisierungsschaltung 25 beispielsweise eine weitere Schaltung 252 auf, von der ein Beispiel in Figur 7A dargestellt ist. Die dargestellte Schaltung weist zwei weitere D-Flip-Flops FF4, FF5 sowie ein weiteres XOR-Gatter XOR2 auf. Einem ersten FF4 dieser Flip-Flops ist dabei das erste Hilfssignal TS' zugeführt. Das Übertragungs-Endsignal TD steht am Ausgang des zweiten FF5 dieser Flip-Flops zur Verfügung. Dem XOR-Gatter XOR2 sind jeweils die Ausgangssignale der beiden Flip-Flops FF4, FF5 als Eingangssignale zugeführt, ein Ausgangssignal des XOR-Gatters XOR2 ist dem zweiten Flip-Flop FF5 als Eingangssignal zugeführt. Die Flip-Flops FF4, FF5 sind jeweils durch das zweite Taktsignal CLK2 getaktet. Das Ausgangssignal des ersten Flip-Flops ändert bei dieser Schaltung seinen Pegel mit Beginn einer ersten Taktperiode des Taktsignals CLK2 nachdem das Hilfssignal TS' einen High-Pegel angenommen hat. Ein Pegelwechsel des Übertragungs-Endsignals TD folgt hierbei verzögert mit einer Taktperiode. Das Übertragungs-Endsignal TD behält hierbei seinen Pegel bis zu einem nächsten Impuls des Hilfssignals TS' bei. Ursache hierfür ist die Verknüpfung des Ausgangssignals des zweiten Flip-Flops FF5 mit dem Ausgangssignal des ersten Flip-Flops FF4 über das XOR-Gatter XOR2 und die Tatsache, dass das Hilfssignal TS' zum Zeitpunkt eines Pegelwechsels am Ausgang des zweiten Flip-Flops ebenfalls seinen Pegel wechselt.

Eine weitere Variante der Schaltung 252 zur Erzeugung des Übertragungs-Endsignals TD aus dem ersten Hilfssignal TS' ist in Figur 7B dargestellt. Bei dieser Schaltung 252 ist dem ersten Flip-Flop FF4 ein Toggle-Flip-Flop nachgeschaltet, das einen Toggle-Eingang aufweist, dem das Ausgangssignal des ersten Flip-Flops FF$ zugeführt ist und das ebenfalls durch das zweite Taktsignal CLK2 getaktet ist. Dieses Toggle-Flip-Flop ändert immer dann seinen Pegel und behält diesen im weiteren bei, wenn zum Zeitpunkt einer Taktflanke des Taktsignal CLK2 ein vorgegebener Signalpegel - in dem Beispiel ein High-Pegel - an seinem Eingang anliegt.

Es sei darauf hingewiesen, dass die anhand der Figuren 6 und 7 erläuterten Schaltungen zur Erzeugung des Übertragungs-Endsignals TD aus dem ersten Hilfssignal TS' lediglich als Beispiel zu verstehen sind. Selbstverständlich sind beliebige weitere Schaltungen einsetzbar, die dazu ausgebildet sind, einen Pegelwechsel des Übertragungs-Endsignals TD nach einer vorgegebenen Anzahl von Taktperioden nach einem Pegelwechsel des Übertragungs-Startsignals TS zu erzeugen. Bei der zuvor erläuterten Schaltung funktionieren die Flip-Flops FF1-FF3 der ersten Schaltung 25 als Schieberegister, die den Pegelwechsel verzögert um eine Anzahl Taktperioden am Ausgang der Flip-Flop-Kette FF1-FF3 bereitstellen. Das erste Hilfssignal markiert dabei den Zeitpunkt, zu dem der Pegelwechsel das Ende der Flip-Flop-Kette erreicht. Das erste Hilfssignal TS' ist dabei lediglich für die zuvor erläuterte Implementierung erforderlich. Bei anderen Implementierungen kann auf dieses Hilfssignal gegebenenfalls verzichtet werden.

Eine Freigabe des ersten Speichers 11 und des Adressspeichers für ein Beschreiben mit neuen zu übertragenden Daten und mit neuen Adressdaten erfolgt zeitverzögert nach einem Pegelwechsel des Übertragungs-Endsignals TD durch ein Freigabesignal TD', dessen zeitlicher Verlauf in Figur 5 ebenfalls dargestellt ist. In dem dargestellten Beispiel ist dieses Freigabesignal so gewählt, dass es nach Ablauf einer vorgegebenen Anzahl von Taktperioden des ersten Taktsignals CLK1 einen Signalimpuls aufweist, der den ersten Speicher 11 und den Adressspeicher 13 in nicht näher dargestellter Weise zum Beschreiben freigibt. Gleichzeitig kann dem ersten Prozessor P1 über das Bestätigungssignal ACC signalisiert werden, dass neue Daten für die Übertragung akzeptiert werden.

Die Erzeugung des Freigabesignals TD' nach Maßgabe des ersten Taktsignals CLK1 erfolgt durch die erste Signalisierungsschaltung 15. Die erste Signalisierungsschaltung 15 kann zu diesem Zweck eine der Schaltung 251 gemäß Figur 6 entsprechende Schaltung aufweisen. Die in der ersten Signalisierungsschaltung 15 verwendete Schaltung unterscheidet sich von der in Figur 6 dargestellten lediglich dadurch, dass der Schaltung der ersten Signalisierungsschaltung 15 das Übertragungs-Endsignal TD und das erste Taktsignal CLK1 anstelle des Übertragungs-Startsignals TS und des zweiten Taktsignals CLK2 zugeführt sind, was in Figur 6 in Klammern angegeben ist. Die Erzeugung des Bestätigungssignals ACC kann in nicht näher dargestellter Weise ebenfalls durch die erste Signalisierungsschaltung 15 erfolgen. In dem Beispiel gemäß Figur 5 werden drei Taktperioden des ersten Taktsignals CLK1 nach einem Pegelwechsel des Übertragungs-Endsignals TD abgewartet, bis die Speicher 11, 12 wieder freigegebenen werden.

Die Erzeugung eines weiteren Pegelwechsels des Übertragungs-Startsignals TS für die Übertragung neuer Daten erfolgt dabei frühestens mit oder nach dem Signalimpuls des Freigabesignals. Für die Erzeugung des Übertragungs-Startsignals können dabei zusätzlich Informationen berücksichtigt, die über die Schnittstelle 14 von dem ersten Prozessor P1 geliefert werden.

Die Verarbeitung des Übertragungs-Startsignals TS nach Maßgabe des zweiten Taktsignals CLK2 dahingehend, dass nach einem Pegelwechsel dieses Übertragungs-Startsignals TS erst zeitverzögert nach einer Anzahl Taktperioden des zweiten Taktsignals CLK2 ein Pegelwechsel des Übertragungs-Endsignals TD erfolgt, und die Verarbeitung des Übertragungs-Endsignals TD nach Maßgabe des ersten Taktsignals CLK1 dahingehend, dass nach einem Pegelwechsel des Übertragungs-Endsignals TD erst zeitverzögert nach einer Anzahl Taktperioden des ersten Taktsignals CLK1 eine Freigabe der Speicher 11, 13 in der ersten Einheit 10 erfolgt, gewährleistet eine sichere Übertragung der Daten von der ersten 10 zu der zweiten Verarbeitungs- und Speichereinheit 20.

Während des zuvor anhand der Signalverläufe in Figur 5 erläuterten Schreibzugriffs wird das am Schreibeingang 20₄ anliegende Datenwort WD über den ersten Multiplexer 22, dem die Adressdaten ADR am Adresseingang 20₃ zugeführt sind, an die entsprechende Speicherstelle des Registers 21 weitergeleitet.

Ein Lesezugriff auf das in der zweiten Taktdomäne angeordnete Register (21 in Figur 4) ist in Figur 8 anhand zeitlicher Signalverläufe dargestellt. Dieser Lesezugriff unterscheidet sich von dem Schreibzugriff lediglich dadurch, dass Daten des Registers aus der durch die Adressdaten ADR angegebenen Adresse ausgelesen und über den zweiten Multiplexer 23 an einen Leseausgang 20₅ der zweiten Verarbeitungs- und Speichereinheit 20 ausgegeben und von dort in den ersten Datenspeicher (11 in Figur 3) eingelesen werden. Das Einlesen der Daten in diesen zweiten Datenspeicher erfolgt hierbei in nicht näher dargestellter Weise bei einem vorgegebenen Signalpegel, in dem Beispiel einem High-Pegel, des Freigabesignals TD'.

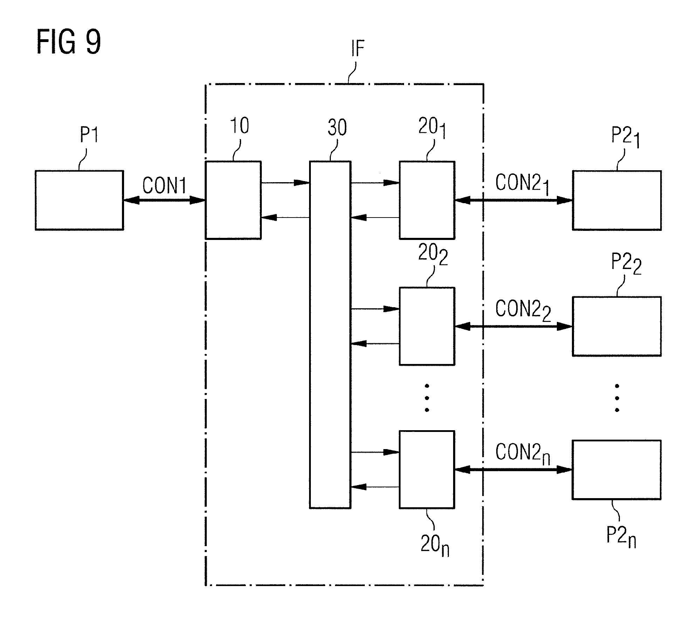

Figur 9 zeigt schematisch eine Datenverarbeitungsvorrichtung, die mehr als zwei Taktdomänen aufweist, nämlich eine erste Taktdomäne mit einem ersten Prozessor P1 der nach Maßgabe eines ersten Taktes CLK1 arbeitet, und weitere Taktdomänen mit jeweils wenigstens einem Prozessor P2₁, P2₂, P2ₙ. Der erste Prozessor P1 ist bei der dargestellten Vorrichtung über eine erste Datenverbindung CON1, beispielsweise einen Datenbus an die Schnittstellenschaltung IF angeschlossen. Die Prozessoren der weiteren Taktdomänen sind jeweils über weitere Datenverbindungen CON2₁, CON2₂, CON2ₙ an die Schnittstellenschaltung IF angeschlossen. Takte dieser weiteren Taktdomänen sind nachfolgend mit CLK2₁, CLK2₂, CLK2ₙ bezeichnet.

Die Schnittstellenschaltung IF weist eine erste Verarbeitungs- und Speichereinheit 10 sowie mehrere zweite Verarbeitungs- und Speichereinheiten 20₁, 20₂, 20ₙ auf, die an die weiteren Datenverbindungen CON2₁, CON2₂, CON2ₙ angeschlossen sind. Die erste Verarbeitungs- und Speichereinheit 10 ist beispielsweise entsprechend der anhand von Figur 2 erläuterten Einheit 10 aufgebaut, und die weiteren Verarbeitungs- und Speichereinheiten 20₁, 20₂, 20ₙ sind beispielsweise entsprechend der anhand von Figur 4 erläuterten Einheit 20 aufgebaut. Zwischen der ersten Verarbeitungs- und Speichereinheit 10 und den weiteren Verarbeitungs- und Speichereinheiten 20₁...20ₙ ist eine weitere Schnittstellenschaltung 30 angeordnet, die dazu ausgebildet ist, die von der ersten Einheit 10 gelieferten Signale nach Maßgabe des Adresssignals WADR an die jeweilige zweite Einheit 10 weiterzuleiten. Man macht sich hierbei zu Nutze, dass alle Registeradressen in den weiteren Taktdomänen nur einmal vorhanden und damit eindeutig sind. Anhand der Registeradresse kann dadurch die jeweilige Taktdomäne ausgewählt werden, so dass die von der ersten Einheit 10 gelieferten Signale korrekt an die Verarbeitungs- und Speichereinheit der jeweiligen Taktdomäne weitergeleitet werden können.

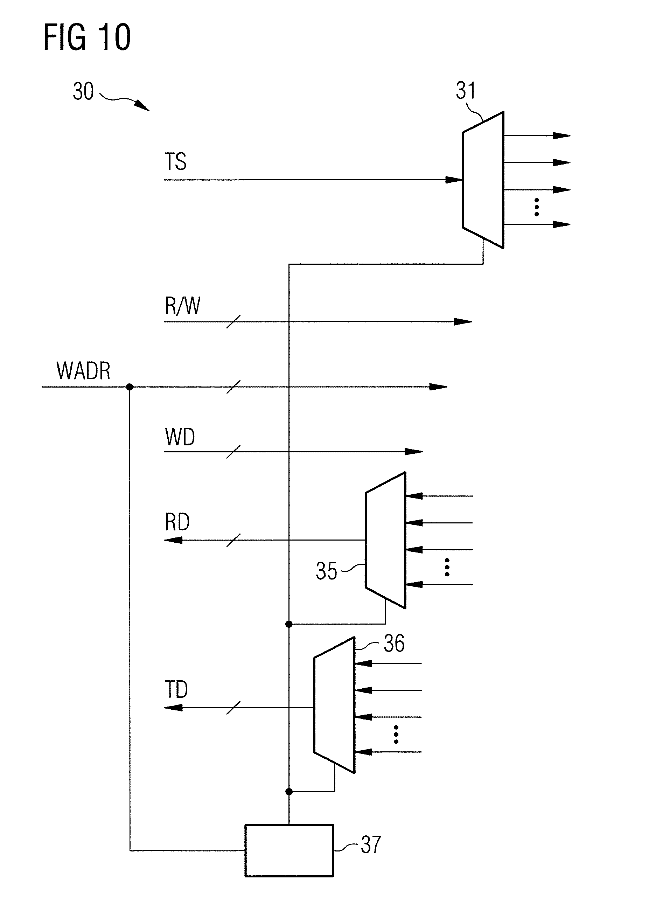

Figur 10 zeigt ein Realisierungsbeispiel der weiteren Schnittstellenschaltung 30. Diese weitere Schnittstellenschaltung 30 umfasst eine Anzahl von Multiplexern. In dem in Figur 10 dargestellten Beispiel sind drei Multiplexer vorhanden: ein erster Multiplexer 31 zum Multiplexen des Übertragungs-Startsignals TS; ein zweiter Multiplexer 35 zum Multiplexen der von den zweiten Einheiten übertragenen, in der ersten Verarbeitungs- und Speichereinheit 10 zu speichernden Nutzdaten; und ein dritter Multiplexer 36 zum Multiplexen des Übertragungs-Endsignals TD. Die weiteren Signalleitungen, wie die Signalleitung für das Schreib-Lesesignal R/W, für die Adressdaten und für die zu schreibenden Daten WD sind allen weiteren Verarbeitungs- und Speichereinheiten zugeführt.

Die Schnittstellenschaltung 30 weist außerdem einen Adressdekodierer 37 auf, dem die Adressdaten ADR zugeführt sind, und der abhängig von diesen Adressdaten ADR die Multiplexer 31-36 ansteuert.

Das zuvor erläuterte Verfahren bzw. die zuvor erläuterte Schnittstellenschaltung eignet sich für beliebige Taktverhältnisse zwischen dem ersten Takt CLK1 und dem zweiten Takt CLK2. Dieses Taktverhältnis kann sich insbesondere während der Durchführung des Verfahrens bzw. des Betriebs der Schnittstellenschaltung auch ändern. Möglich ist dies durch die bei dem erläuterten Verfahren durchgeführte "Handshake"-Prozedzur unter Verwendung des Übertragungs-Startsignals TS und des Übertragungs-Endsignals TD, gegebenenfalls in Verbindung mit dem ersten Hilfssignal TS' und dem Freigabesignal TD'.

Das erläuterte Verfahren bzw. die erläuterte Schnittstellenschaltung ist resourcensparend, d.h. mit einem geringen schaltungstechnischen Aufwand realisierbar.

## Patentansprüche

1. Verfahren zur Übertragung von Daten zwischen einer ersten Taktdomäne mit einem ersten Takt (CLK1) und wenigstens einer weiteren Taktdomäne mit einem zweiten Takt (CLK2) das für die Übertragung von Daten von der ersten zu der zweiten Taktdomäne (CLK1, CLK2) aufweist:
Einlesen eines Datenwortes nach Maßgabe des ersten Taktes (CLK1) in einen ersten Speicher (11) und Sperren des ersten Speichers nach Speichern des Datenwortes,
Signalisieren eines Übertragungsstarts nach Speichern des Datenwortes in dem ersten Speicher (11) mittels eines Übertragungs-Startsignals (TS),
Auslesen des Datenwertes aus dem ersten Speicher und Einlesen des Datenwortes in einen zweiten Speicher, jeweils nach Maßgabe des zweiten Taktsignals (CLK2),
Verarbeiten des Übertragungs-Startsignals (TS) nach Maßgabe des zweiten Taktsignals (CLK2) zur Erzeugung eines Übertragungs-Endsignals (TD),
Verarbeiten des Übertragungs-Endsignals (TD) nach Maßgabe des ersten Taktsignals (CLK1) zur Erzeugung eines Freigabesignals (TD') und Freigeben des ersten Speichers abhängig von dem Freigabesignal (TD').

2. Verfahren nach Anspruch 1, bei dem ein Übertragungsstart durch einen Pegelwechsel des Übertragungs-Startsignals TS signalisiert wird.

3. Verfahren nach Anspruch 1 oder 2, bei dem ein Pegelwechsel des Übertragungs-Endsignals (TD) nach einer vorgegebenen Anzahl von Taktperioden des zweiten Taktsignals (CLK2) nach einem Pegelwechsel des Übertragungs-Startsignals (TS) erzeugt wird.

4. Verfahren nach Anspruch 3, bei dem die Erzeugung eines Pegelwechsels des Übertragungs-Endsignals (TD) unter Verwendung eines ersten Hilfssignals (TS') erfolgt, das nach einer vorgegebenen Anzahl von Taktperioden des zweiten Taktsignals (CLK2) nach einem Pegelwechsel des Übertragungs-Startsignals (TS) erzeugt wird.

5. Verfahren nach Anspruch 4, bei dem das erste Hilfssignal (TS') ein Signalimpuls ist, dessen Dauer dem einer Taktperiode des zweiten Taktsignals (CLK2) entspricht.

6. Verfahren nach Anspruch 4 oder 5, bei dem das Übertragungs-Endsignals (TD) gegenüber dem Beginn eines Signalimpulses des Hilfssignals (TS') derart verzögert ist, dass ein Pegelwechsel des Übertragungs-Endsignals (TD) nach Beginn einer vorgegebenen Anzahl von Taktperioden des Taktsignals (CLK2) nach dem Beginn des Signalsimpulses des Hilfssignals (TS') vorliegt.

7. Verfahren nach einem der vorangehenden Ansprüche, bei dem ein Pegelwechsel des Freigabesignals (TD') nach einer vorgegebenen Anzahl von Taktperioden des ersten Taktsignals (CLK1) nach einem Pegelwechsel des Übertragungs-Endsignals (TD) erzeugt wird.

8. Verfahren zur Übertragung von Daten zwischen einer ersten Taktdomäne mit einem ersten Takt (CLK1) und wenigstens einer weiteren Taktdomäne mit einem zweiten Takt (CLK2) das für die Übertragung von Daten von der zweiten zu der ersten Taktdomäne (CLK2, CLK1) aufweist:
Einlesen eines Datenwortes nach Maßgabe des ersten Taktes (CLK1) in einen ersten Speicher (11) und Sperren des ersten Speichers nach Speichern des Datenwortes,
Signalisieren eines Übertragungsstarts nach Speichern des Datenwortes in dem ersten Speicher (11) mittels eines Übertragungs-Startsignals (TS),
Auslesen des Datenwertes aus dem ersten Speicher und Einlesen des Datenwortes in einen zweiten Speicher, jeweils nach Maßgabe des zweiten Taktsignals (CLK2),
Verarbeiten des Übertragungs-Startsignals (TS) nach Maßgabe des zweiten Taktsignals (CLK2) zur Erzeugung eines Übertragungs-Endsignals (TD),
Verarbeiten des Übertragungs-Endsignals (TD) nach Maßgabe des ersten Taktsignals (CLK1) zur Erzeugung eines Freigabesignals (TD') und Freigeben des ersten Speichers abhängig von dem Freigabesignal (TD').
